# EUROPÄISCHE PATENTSCHRIFT

(11) **EP 3 830 560 B1**
(45) Veröffentlichungstag und Bekanntmachung des Hinweises auf die Patenterteilung: **30.03.2022**
(21) Anmeldenummer: 19749294.5
(22) Anmeldetag: 30.07.2019
(51) Int. Cl.: G01N 27/02, G01N 27/90

(54) **INDUKTIVE ANALYSE METALLISCHER OBJEKTE**
INDUCTIVE ANALYSIS OF METAL OBJECTS
ANALYSE INDUCTIVE D'OBJETS MÉTALLIQUES

(30) Priorität: 30.07.2018 DE 102018118408; 27.08.2018 DE 102018120912
(43) Veröffentlichungstag der Anmeldung: 09.06.2021
(73) Patentinhaber: Reime, Gerd, 77815 Bühl (DE)
(72) Erfinder: Reime, Gerd, 77815 Bühl (DE)
(74) Vertreter: RPK Patentanwälte Reinhardt, Pohlmann und Kaufmann Partnerschaft mbB
(86) Internationale Anmeldenummer: PCT/EP2019/070494
(87) Internationale Veröffentlichungsnummer: WO 2020/025608

(56) Entgegenhaltungen:
- DE-A1- 19 821 462
- GB-A- 2 225 856
- US-A- 4 110 679
- US-A- 4 215 310
- US-A1- 2008 150 537
- US-A1- 2010 148 781

## Beschreibung

Die Erfindung betrifft eine Messanordnung sowie ein Verfahren zur Analyse metallischer Objekte nach dem Oberbegriff der Ansprüche 1 bzw. 7.

Wenn im Rahmen dieser Anmeldung von "induktiven Eigenschaften" einer Spule gesprochen wird, so bezieht sich dies auf die Beeinflussung der Energieabgabe und insbesondere der Phase und/oder der Amplitude des an der Empfängerspule empfangenen Signales.

"Hochohmig" bedeutet im Rahmen dieser Anmeldung, dass ein Ausgangssignal der Empfängerspule so hochohmig abgegriffen wird, dass Änderungen des Drahtwiderstands aufgrund der Temperatur keinen oder allenfalls noch einen vernachlässigbaren Einfluss auf das auszuwertende Ausgangssignal haben.

Induktive Sensoren zur Analyse metallischer Objekte erzeugen mit einer Spule ein magnetisches Wechselfeld, das in das zu untersuchende Metall eindringt. An Hand der Beeinflussung des Feldes wird z.B. auf die Metallart oder einen Abstand der Spule zu einem Metall geschlossen. Letzteres wird z.B. in der "Schichtdickenmessung" eingesetzt, bei der die Dicke einer induktiv nicht beeinflussbaren Lackschicht zwischen Metall und Spule bestimmt wird.

Die Spule zur Erzeugung des magnetischen Wechselfeldes kann mit einem Rechteck- oder Sinussignal beliebiger Frequenz angesteuert werden und auf unterschiedlichste Art ausgestaltet sein. So verwenden klassische Schatzsuchgeräte oftmals "entkoppelte Spulen". Dabei wird eine Spule (Erregerspule) mit einem Wechselstrom angesteuert und liefert ein magnetisches Wechselfeld. Eine zweite Spule (Empfangsspule) wird mechanisch so angeordnet, dass sich die auf- und absteigenden Feldlinien der Erregerspule in der Empfangsspule gegenseitig aufheben und somit diese Spule (ohne Metalleinfluss) kein Ausgangssignal liefert. Erst bei Metalleinfluss verschiebt sich die Symmetrie der Feldlinien, ein entsprechendes elektrisches Signal kann an der Empfangsspule abgenommen werden. Dies ist z.B. als "Doppel-D" Verfahren aus der DE 43 39 419 C2 bekannt. Allerdings hat dieses Messverfahren den Nachteil, dass die Erregerspule und die Empfangsspule keine gemeinsame Symmetrieachse aufweisen.

Aus der der den unabhängigen Ansprüchen zu Grunde liegenden US 2008/0150537 A1 ist ein Metalldetektor vom Pulsinduktionstyp bekannt, der in der Lage ist, zwischen Metallobjekten und Mineralien zu unterscheiden, die Metalle aufgrund der Absorption und Freisetzung von Energie imitieren. Während eines ersten Messintervalls wird das zu messende Objekt mit einem rampenförmig ansteigenden Magnetfeld beeinflusst, das während der darauffolgenden zweiten Messung im zu messenden Objekt noch eine Wirkung ausüben kann und die Messwerte der zweiten Messung dadurch beeinflusst. Die Menge der im Objekt verbleibenden Energie wird durch Vergleichen der Signale gemessen, die während bestimmter Intervalle einer Spulenerregerimpulsfolge erzeugt werden, die bipolare Stromrampen umfasst, die identische Signale in metallischen Zielen, aber unterschiedliche Signale in magnetischen Mineralien induzieren. Der Metalldetektor dient jedoch nicht der präzisen Analyse metallischer Objekte. In Abhängigkeit vorbestimmter Kriterien und von Spannungsamplitudensteuerungen wird das Ausgangssignal über einen Mikrocontroller und einen DAC zu Null geregelt. Eine Regelung am Fußpunkt der Erregerspule findet nicht statt.

Ebenso sind aus US 4 110 679 A, US 2010/148781 A1, DE 198 21 462 A1, GB 2 225 856 A, US 4 215 310 A zwar Operationsverstärker oder Vergleicher bekannt, aber kein Operationsverstärker oder Vergleicher, an dessen ersten Eingang die Erregerspannung anliegt und an dessen zweiten Eingang die Spannung an dem Fußpunktwiderstand der Erregerspule anliegt.

Aus der DE 10 2012 001 202 A1 ist ein Sensor zur Ortung metallischer Objekte mit induktiv miteinander gekoppelten Spulen bekannt, die zur Wechselwirkungsentkopplung teilweise überlappend angeordnet sind. Dabei weisen Erregerspule und Empfängerspule im Wesentlichen eine identische Spulenform auf und sind zueinander verdreht und/oder versetzt angeordnet sind, wobei sich mehrere symmetrisch angeordnete, überlappende Bereiche ausbilden. Zudem sind mäandernde Abschnitte vorgehsehen, die sich wechselseitig überlappen. Trotz vollständiger Entkopplung zwischen Erregerspule und Empfangsspule arbeitet das Verfahren mit einer gemeinsamen Symmetrieachse beider Spulensysteme.

Andere Verfahren verwenden zwei vorzugsweise in Reihe geschaltete Spulen, von denen eine die von der Metallanwesenheit beeinflusste Messspule ist, während die andere eine Referenzspule darstellt und vorzugsweise entfernt von der Messspule angeordnet ist. Werden beide Spulen von zwei um 180 Grad gegeneinander versetzten Sinus- oder Rechtecksignalen gespeist, heben sich bei genau gleichen Spulenparametern die eingespeisten Signale am Mittelabgriff der beiden Spulen auf. Erst wenn sich Metall der Messspule annähert, verändert sich die induktive Eigenschaft der Messspule und am Mittelabgriff kann ein entsprechendes Signal abgegriffen werden.

Ein weiteres Messverfahren verwendet drei Spulen, die mechanisch in einer Reihe achsensymmetrisch hintereinander angebracht werden. Wird die mittlere Spule mit einem Wechselstrom bestromt, bildet sich an den jeweils beiden anderen Spulen ein Signal aus, das sich bei entsprechender Beschaltung der Spulen miteinander wieder auslöscht. Eine Metallannäherung an einer der beiden außen liegenden Spulen verändert die induktiven Eigenschaften dieser Spule, so dass keine vollständige Auslöschung stattfindet und aus dem so entstandenen Signal auf die Anwesenheit oder die Art des Metalls geschlossen werden kann. Auch die umgekehrte Form, also zwei Sendespulen außen und eine Empfängerspule innen, wird verwendet.

Die oben beschriebenen Systeme arbeiten in der Regel mit sinusförmigen Schwingungen, bzw. mit einem gewollten Resonanzverhalten, um die Empfindlichkeit auf Metalleinfluss zu erhöhen. Dabei ist es nachteilig, wenn Anregungsfrequenz und Resonanzfrequenz eines Empfangskreises nicht genau übereinstimmen, da sich dann Phasen bzw. Amplitudenfehler einstellen können.

Auch ein Temperatureinfluss auf das Messsystem kann sich nachteilig auswirken, da sich bei Temperatureinfluss der Innenwiderstand des Spulendrahtes verändern kann, was wiederum eine Verschiebung der Phase bzw. der Amplitude des Resonanzkreises nach sich zieht. Zur Kompensation des Temperatureinflusses auf die Sende- oder Messspulen verwenden einige Messsysteme eine intervallmäßige Strommessung durch die Spulensysteme und ermitteln dadurch den temperaturabhängigen Innenwiderstand. Mit den so gewonnenen Widerstandsmesswerten kann dann ein Korrekturfaktor für die eigentliche Metallartenbestimmung durchgeführt werden.

Soll eine induktive Analyse eines unbekannten Metalls durchgeführt werden, ist die Messfrequenz entsprechend vorab zu wählen. Aufwändigere Verfahren arbeiten mit mehreren, in der Regel umschaltbaren Frequenzen, wobei hier eine effiziente Temperaturkompensation besonders schwierig ist.

Mit oben beschriebenen induktiven Systemen können auch Lackdicken auf bekanntem Metall gemessen werden. Lackdicke bedeutet, ein Abstand zwischen der Metalloberfläche und dem Spulensystem verändert Amplitude und Phase des gemessenen Anregungssignals im Empfängerkreis. Auch hierfür muss eine gute Temperaturkompensation des Messsystems erreicht werden.

Andere Verfahren (CA 2 951 848 A1) senden einen Rechteckpuls in eine Sendespule und messen nach dem Abschalten des Pulses die induktive Reaktion des zu detektierenden oder zu analysierenden Metalls mit der Sende- oder einer weiteren Spule.

In der Regel werden also in induktiven Messsystemen eine oder mehrere Spulen mit Sinus- oder Rechtecksignalen einer bestimmten Frequenz oder mit einem einzigen Rechteckimpuls angeregt, um durch die induktive Wirkung von Metall auf diese angeregten Spulensysteme eine Amplituden- und/oder Phasenänderung an einer der Anregungsspulen oder an separaten, speziell zur Erfassung des ausgesandten wechselnden Magnetfeldes angebrachten Erfassungsspulen messbar zu machen.

Bei all diesen induktiven Analyse- oder Detektionssystemen können Temperaturveränderungen unerwünschte Einflüsse auf die induktiven Eigenschaften der Sende- bzw. Empfangsspulensysteme ausüben, so dass viele Systeme mit Temperaturkompensationsverfahren ausgestattet sind.

Aufgabe der Erfindung ist die Schaffung eines induktiven Analyse- bzw. Detektionsverfahrens, bei dem Temperatureinflüsse auf das Spulensystem keinerlei Auswirkung haben und das darüber hinaus eine Spektralanalyse der induktiven Eigenschaften des zu analysierenden Metalls in einem weiten Frequenzbereich ermöglicht.

Dies wird mit einer Vorrichtung bzw. einem Verfahren gemäß den Merkmalen des Patentanspruchs 1 bzw. 7 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Weiterhin soll solch ein Messsystem zur Analyse des metallischen Materials, der Materialzusammensetzung (Mehrschichtanordnung / Mehrfachbleche), der Materialstärke (Blechdickenmessung), der Lackdickenbestimmung (Abstand des Spulensystems zum Metall), der Detektion metallischer Objekte hinter einer z.B. metallischen Wand (z.B. Position der Kupplungskette im geschlossenen Kupplungsgehäuse im KFZ), als Annäherungssensor usw. eingesetzt werden können.

Im Rahmen der Spektralanalyse der induktiven Eigenschaften zeigt sich im Ausgangssignal des Messsystems ein Spektrum der einzelnen Frequenzen, die das Ausgangssignal mehr oder weniger stark je nach Metallart und -eigenschaften beeinflussen und verändern. Diese Informationen über das zu untersuchende Objekt können vorzugsweise durch Fouriertransformationen des Ausgangssignals gewonnen werden.

Dazu wird in einer Messanordnung zur induktiven Analyse metallischer Objekte die Erregerspule mittels einer Erregerspannung erregt. Die Erregerspule ist mit der Empfängerspule induktiv gekoppelt. Das Ausgangssignal wird an der Empfängerspule zur Auswertung abgegriffen. Die Erregerspannung wird als rampenförmiges Spannungssignal einer mit einer Vergleichsstufe versehenen Regeleinrichtung zugeführt, die der am Beginn der Messung, also im Moment des Rampenanstieges, wirksamen Eigeninduktion der Spule, die ja dem Entstehen eines Magnetfeldes entgegenwirkt, am Spuleneingang so verändert, dass an einem Widerstand am Fußpunkt der Spule wieder exakt die vorgegebene rampenförmige Form der Erregerspannung anliegt. Dazu umfasst die Regeleinrichtung einen Vergleicher, an dessen ersten Eingang die Erregerspannung anliegt und an dessen zweiten Eingang eine Spannung an einem Fußpunktwiderstand der Erregerspule anliegt und dessen Ausgang den Einspeiseanschluss der Erregerspule speist. Damit sind Mittel zur Erzeugung eines rampenförmigen Spannungssignals als Vorgabe für einen rampenförmigen Strom durch die Erregerspule vorgesehen, wobei die Regeleinrichtung den Strom am Fußpunkt der Erregerspule so regelt, dass ein rampenförmiger Erregerstrom entsteht, wobei der in die Spule einfließende Strom durch das metallische Objekt moduliert wird und sich in der Veränderung der Erregerspannung auswirkt. In der Praxis hat sich gezeigt, dass sich so ein rampenförmig ansteigendes Magnetfeld, also vorzugsweise ein nicht lineares Magnetfeld, in der Erregerspule aufbaut, das in das zu untersuchende Objekt eindringt und vom metallischen Objekt zeitlich moduliert wird. An Hand des Ausgangssignals ergibt sich eine Auskunft über Art, Beschaffenheit als auch Schichtdicken und -lagen des Objekts. Durch die Art der Regelung über Messung des Stroms an einem Fußpunkt bzw. Fußpunktwiderstand werden auch Temperatureinflüsse auf die Erregerspule und damit auf das entstehende Magnetfeld ausgeschlossen.

Vorzugsweise regelt die Regeleinrichtung den Strom am Fußpunkt der Erregerspule so, dass ein stetig steigender Erregerstrom entsteht, wobei die Einwirkung des metallischen Objekts während des rampenförmigen Spannungssignals zur Erzeugung des Erregerstroms diesen durch die Regelung des Stroms am Fußpunkt der Erregerspule so beeinflusst, dass aus dieser Spannungsänderung entsprechende Messwerte in Bezug auf das beeinflussende Metall entnommen werden können. Zur thermischen Entkopplung kann diese Information über eine Empfängerspule abgegriffen werden. Das so beeinflusste Ausgangssignal gestattet die gewünschte, tief ins metallische Objekt reichende Analyse des metallischen Objekts.

Dabei hat sich vorteilhaft herausgestellt, dass die Art des Metalls des metallischen Objekts die Einwirkung ist, die die Stärke des Erregerstroms während der Zeit des Magnetfeldanstieges in zeitlicher Abhängigkeit von der Eindringtiefe ändert. Dadurch kann auf die Zusammensetzung von Legierungen ebenso geschlossen werden als auch auf den Schichtaufbau von metallischen Objekten.

Bevorzugt erzeugen die Mittel zur Erzeugung eines rampenförmigen Spannungssignals der Erregerspannung zu Beginn des rampenförmigen Anstiegs zunächst einen gegenüber dem rampenförmigen Anstieg steilen Anstieg der Erregerspannung. Dadurch ist bei der Bestromung der Erregerspule sichergestellt, dass sich tatsächlich ein rampenförmiger Erregerstrom einstellt, der zu dem durch die Beeinflussung von Metall nicht linearen Magnetfeldaufbau führt.

Vorzugsweise ist die Empfängerspule benachbart und/oder parallel zur Erregerspule angeordnet. Ebenso können Empfängerspule und Erregerspule bifilar gewickelt sein. Dies gestattet einen platzsparenden Aufbau der Spulenanordnung ohne Beeinträchtigung der Analyse.

Um auch eine Temperaturstabilität der Empfängerspule zu gewährleisten, wird vorzugsweise das Ausgangssignal an der Empfängerspule hochohmig abgegriffen.

Verfahrensgemäß ergeben sich die gleichen Vorteile, wenn zur induktiven Analyse metallischer Objekte die wenigstens eine mittels einer Erregerspannung erregbare Erregerspule bestromt wird und ein Ausgangssignals der Messanordnung zur Analyse der metallischen Objekte ausgewertet wird. Indem eine geregelte Erregerspannung als im Wesentlichen rampenförmiges Spannungssignal der Erregerspannung der Erregerspule zugeführt wird und der Strom am Fußpunkt bzw. Fußpunktwiderstand der Erregerspule so geregelt wird, dass ein rampenförmiger Erregerstrom tatsächlich entsteht, der jedoch durch die Energieabsorption des metallischen Objekts moduliert wurde und dadurch eine Abweichung der geregelten Erregerspannung von der vorgegebenen idealen Rampenform hervorruft, wird ein Eindringen des rampenförmig ansteigenden magnetischen Feldes in das Objekt ermöglicht, das eine Analyse des Frequenzspektrums aus der Empfängerspule zur Analyse des Objekts ermöglicht.

Vorzugsweise wird der Strom am Fußpunkt der Erregerspule so durch Vergleich der Spannung am Fußpunkt mit der vorgegebenen Rampenspannung durch Abweichung der Erregerspannung von der idealen Rampenform geregelt, dass ein stetig steigender Erregerstrom entsteht. Dabei beeinflusst die Einwirkung des metallischen Objekts während des rampenförmigen Spannungssignals zur Erzeugung des Erregerstroms diesen durch die Regelung des Stroms am Fußpunkt der Erregerspule so, dass aus dieser Spannungsänderung entsprechende Messwerte in Bezug auf das beeinflussende Metall entnommen werden können. Zur thermischen Entkopplung kann diese Information über eine Empfängerspule abgegriffen werden. Das so beeinflusste Ausgangssignal der Empfängerspule gestattet die gewünschte, tief ins metallische Objekt reichende Analyse des metallischen Objekts.

Vorzugsweise regelt die Regeleinrichtung den Strom am Fußpunkt der Erregerspule so, dass ein stetig steigender Erregerstrom entsteht. Das so beeinflusste Ausgangssignal gestattet die gewünschte, tief ins metallische Objekt reichende Analyse des metallischen Objekts.

Vorteilhaft wird die Stärke des Erregerstroms durch die Art des Metalls des metallischen Objekts verändert. Dadurch kann deutlich auf die Zusammensetzung von Legierungen ebenso geschlossen werden als auch auf den Schichtaufbau von metallischen Objekten.

Bevorzugterweise wird zu Beginn des rampenförmigen Spannungssignals der Erregerspannung zunächst ein gegenüber dem rampenförmigen Anstieg steiler Anstieg der Erregerspannung der Erregerspule geregelt zugeführt. Dadurch ist bei der Bestromung der Erregerspule sichergestellt, dass sich tatsächlich ein rampenförmiger Erregerstrom einstellt, der zu dem nicht linearen Magnetfeldaufbau führt.

Vorzugsweise wird die Empfängerspule benachbart und/oder parallel zur Erregerspule angeordnet. Ebenso können Empfängerspule und Erregerspule bifilar gewickelt sein. Dies gestattet einen platzsparenden Aufbau der Spulenanordnung ohne Beeinträchtigung der Analyse.

Um auch eine Temperaturstabilität der Empfängerspule zu gewährleisten, wird verfahrensgemäß vorzugsweise das Ausgangssignal an der Empfängerspule hochohmig abgegriffen.

Im Folgenden wird die Erfindung an Hand von in den beigefügten Figuren dargestellten Ausführungsbeispielen näher erläutert. Es zeigen:
- Fig. 1: eine Spulenanordnung eines erfindungsgemäßen Messsystems,
- Fig. 2: eine Schaltung zur Einspeisung einer Erregerspannung in eine Erregerspule,
- Fig. 3: eine alternative Schaltung zur Erzeugung eines rampenförmigen Stroms,
- Fig. 4: den Spannungsverlauf der Rampe über der Zeit,
- Fig. 5: eine Schaltung mit integrierter erfindungsgemäßer Spulenanordnung,
- Fig. 6: den Spannungsverlauf an der Erregerspule sowie des Stroms am Fußpunktwiderstand über der Zeit,
- Fig. 7: verschiedene Verläufe der Spannung des Ausgangssignals des Messsystems über der Zeit bei verschiedenen Metallarten und -zusammensetzungen,
- Fig. 8: den alternativen an- und absteigenden Verlauf eines rampenförmigen Erregersignals und eines zugehörigen Ausgangssignals,
- Fig. 9: eine alternative Ausführungsform des Messsystems unter Verwendung eines Mikrocontrollers

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Das eigentliche induktive Messsystem besteht aus einer sehr einfachen Spulenanordnung, wobei die Elektronik im Verhältnis zu den bekannten Messverfahren aus nur wenigen Komponenten aufgebaut ist.

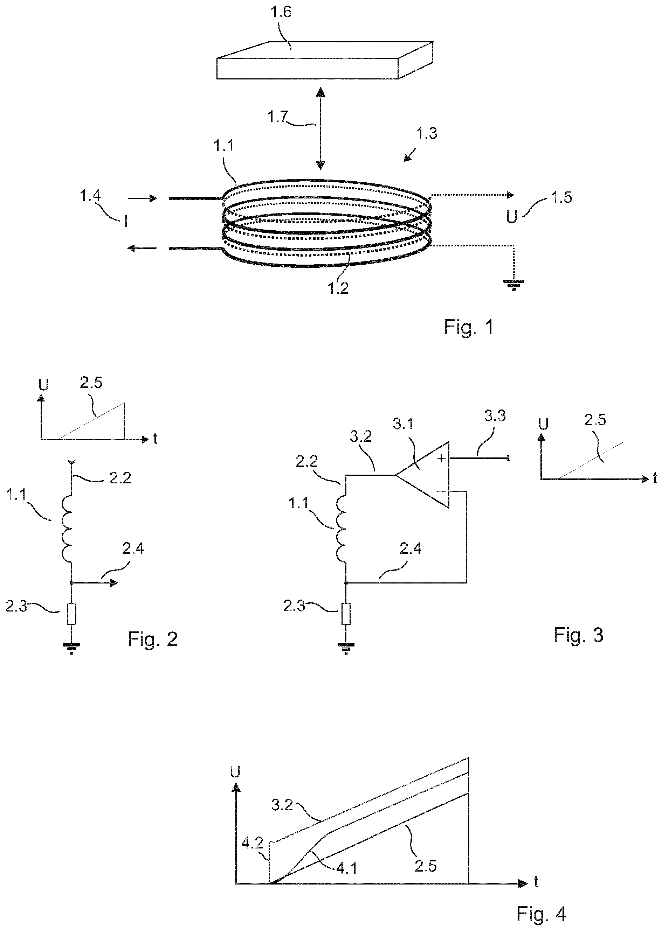

Die Spulenanordnung des Messsystems 1.3 gemäß Fig.1 besteht aus wenigstens zwei Spulen, die vorzugsweise planparallel ausgerichtet sind. Dabei wirkt eine der beiden Spulen als Erregerspule 1.1, die andere als Empfängerspule 1.2. Im Ausführungsbeispiel besteht die Spulenanordnung 1.3 aus je einer Erregerspule 1.1. und einer Empfängerspule 1.2, es können jedoch auch mehrere Erreger- bzw. Empfängerspulen verwendet werden.

Im einfachsten Fall besteht das Spulensystem aus einem Wickelkörper mit zwei bifilar gewickelten Spulen. Das bedeutet, es ist kein Abstand zwischen der Erregerspule 1.1 und der Empfängerspule 1.2 notwendig. Möglich sind auch Spulenanordnungen, bei denen Empfängerspule 1.2 und Erregerspule 1.1 direkt nebeneinander oder auch ineinander angeordnet sind. Auch die Windungszahl von Erregerspule 1.1 und Empfängerspule 1.2 kann unterschiedlich sein. Vorzugsweise weist die Erregerspule weniger Windungen bei höherer Drahtstärke als die Empfängerspule auf.

Im Gegensatz zu klassischen induktiven Messsystemen wird die Erregerspule 1.1 nicht mit einem Sinus- oder Rechtecksignal oder einem Rechteckpuls angeregt, sondern durch einen vorzugsweise von Null aus beginnenden gleichmäßig ansteigenden Gleichstrom in Form einer Rampe, dargestellt durch den Kurvenverlauf der Erregerspannung 2.5 in Fig. 2. Grundsätzlich kann ein einmaliges Messen für die Analyse des metallischen Objekts ausreichend sein. Dieses kann periodisch wiederholt werden, wenn eine kontinuierliche Messung erwünscht ist.

Die Spulenanordnung 1.3 übt somit eine magnetisch induzierte Wechselwirkung auf das metallische Objekt 1.6 aus.

Angenommen, die rampenförmige Erregerspannung 2.5 wird direkt an den Einspeiseanschluss 2.2 der Erregerspule 1.1 angelegt, so folgt auf Grund der Selbstinduktion der Strom durch die Erregerspule der Spannungskurve der Erregerspannung 2.5 nicht unmittelbar, sondern zeitversetzt. Dies wird sichtbar, wenn im Fußpunkt der Erregerspule 1.1 ein Fußpunktwiderstand 2.3 eingesetzt wird, an dem in Folge der entstehenden Spannung 2.4 der Erregerspulenstrom gemessen wird. Fig. 4 verdeutlicht dies. Die Kurve der Erregerspannung 2.5 entspricht dem rampenförmigen Spannungsanstieg am Einspeiseanschluss 2.2, die Kurve 4.1 zeigt den daraus resultierenden Strom, gemessen als Spannungswert am Fußpunktwiderstand 2.3. (zur besseren Verdeutlichung sind die Spannungen an der Erregerspule und der Empfängerspule nicht proportional dargestellt).

Damit der Erregerstrom exakt dem vorgegebenen Kurvenverlauf der Erregerspannung 2.5 folgt, wird daher die Schaltung ergänzt, wie in Fig. 3 gezeigt: Dem nicht invertierendem Eingang 3.3 eines Operationsverstärkers (Vergleicher) 3.1 wird die Erregerspannung 2.5 zugeführt. Sein Ausgang speist den Einspeiseanschluss 2.2 der Erregerspule 1.1. Weiterhin ist der invertierende Eingang am Fußpunktwiderstand 2.3 angeschlossen und erhält die Spannung 2.4 des Fußpunktwiderstandes 2.3. Durch diese Maßnahme wird der Erregerstrom aktiv geregelt und entspricht nun exakt dem Kurvenverlauf der Erregerspannung 2.5.

Damit sind Mittel zur Erzeugung eines rampenförmigen Spannungsignals der Erregerspannung 2.5 als Vorgabe für einen rampenförmigen Strom durch die Erregerspule 1.1 vorgesehen. Die beschriebene Regeleinrichtung regelt den Strom am Fußpunkt der Erregerspule 1.1 so, dass ein rampenförmiger Erregerstrom entsteht, der durch das metallische Objekt 1.6 moduliert wird und sich in der Veränderung der Erregerspannung auswirkt.

Vorzugsweise regelt die Regeleinrichtung den Strom am Fußpunkt der Erregerspule 1.1 so, dass ein stetig steigender Erregerstrom im Fußpunktwiderstand entsteht, wobei die Einwirkung des metallischen Objekts 1.6 während des rampenförmigen Anstiegs des Erregerstroms die Stärke des Erregerstroms ändert. Insbesondere beruht diese Einwirkung auf der Art des Metalls des metallischen Objekts, worauf weiter unten noch näher eingegangen wird.

Betrachtet man den Einfluss der Regeleinrichtung in Fig. 4 genau, so zeigt sich, dass die Mittel zur Erzeugung eines rampenförmigen Spannungssignals der Erregerspannung 2.5 zu Beginn des rampenförmigem Anstiegs zunächst einen gegenüber dem rampenförmigem Anstieg steilen Anstieg 4.2 der Erregerspannung erzeugen.

Die am Einspeiseanschluss 2.2 dadurch entstehende Spannung 3.2 steigt vorzugsweise bei Rampenbeginn zuerst stark an, um dann in den linearen Bereich überzugehen und der Vorgabe des Kurvenverlaufes der Erregerspannung 2.5 zu folgen. Dadurch folgt die Spannung am Fußpunktwiderstand 2.3 in einer bevorzugten Ausführungsform genau dem Kurvenverlauf der vorgegebenen Erregerspannung 2.5. Der Spannungsstieg 4.2 wirkt der Eigeninduktivität der Erregerspule 1.1 entgegen und führt so zu einem linearen Anstieg des Spulenstromes. Dies führt zu einem allmählichen Aufbau des Magnetfelds, das in das metallische Objekt 1.6 eindringt.

Durch diese Maßnahme sind aber auch Temperatureinflüsse auf die Erregerspule 1.1 ausgeschlossen, die sich ja in einer Änderung des Ohm'schen Wicklungswiderstandes und somit der Induktivität bzw. Güte der Spule niederschlagen, da der Erregerstrom ja direkt der vorgegebenen Spannungskurve der Erregerspannung 2.5 folgt. Dies gilt auch, wenn der Kurvenverlauf der Erregerspannung 2.5 nicht linear gewählt wird und/oder wenn er bewusst verändert wird, um z.B. eine Metallausblendung zu erreichen. Da der Strom durch die Erregerspule 1.1 das Magnetfeld bestimmt, ist dieses durch oben beschriebene Maßnahme nicht mehr temperaturabhängig.

Die Empfängerspule 1.2 ist im Gegensatz zu klassischen induktiven Analysesystemen, bei denen in der Regel eine Entkopplung zwischen Sende- und Empfangsspule gewünscht ist, direkt in unmittelbarer Nähe der Erregerspule 1.1 angebracht. Auch eine bifilare Wicklungsanordnung gemäß Fig. 1 mit ihrer "harten" Kopplung kann verwendet werden. Auch können Empfängerspule 1.2 und Erregerspule 1.1 einen gemeinsamen Ferritkern, vorzugsweise einen einseitig geschlossenen Schalenkern verwenden.

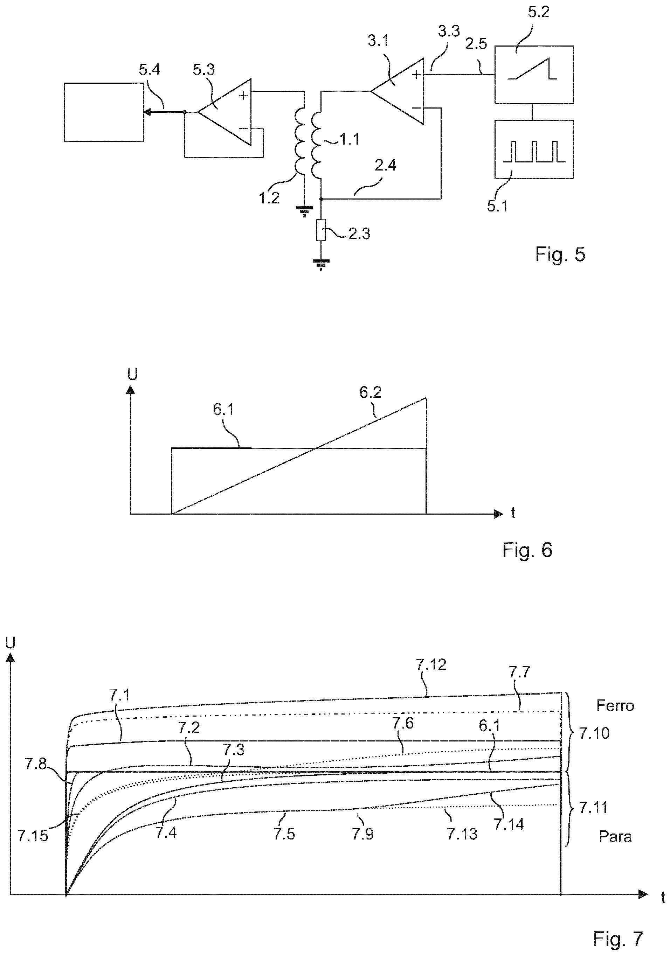

Wird die Erregerspule 1.1 mit einem rampenförmigen Strom 6.2 versorgt, wie er sich am Fußpunktwiderstand 2.3 infolge der vorgegebenen Erregerspannung 2.5 ergibt, bildet sich in der Empfängerspule 1.2 eine reine Gleichspannung 6.1 gemäß Fig. 6 für die Zeit des Rampenanstieges aus. Die Veränderung dieser Gleichspannung im Zeitbereich bei Metallannäherung oder bei auf dem metallischen Objekt aufgelegter Spulenanordnung kann dann ausgewertet werden.

Eine vollständige Temperaturunempfindlichkeit wird erreicht, wenn in der Empfängerspule 1.2 kein Strom fließt. Das bedeutet, dass, wenn das eine Ende der Empfängerspule 1.2 an GND gelegt wird, am anderen Ende lediglich sehr hochohmig die entstehende Spannung abgegriffen wird.

Vorzugsweise sollte der Eingangswiderstand der nachfolgenden Schaltung im Mega-Ohm Bereich liegen. Dadurch wird gewährleistet, dass kein nennenswerter Strom in der Empfängerspule 1.2 fließt und daher eine temperaturbedingte Widerstandsänderung im Wicklungsdraht keinen Einfluss ausüben kann. Der Eingang einer solchen Schaltung kann z.B. ein FET-Eingang eines Operationsverstärkers sein, der die Empfängerspule 1.2 mit nur wenigen pA belastet.

Fig.5 zeigt eine mögliche Ausführung für die hier beschriebene Messmethode. Ein Taktgenerator 5.1 liefert einen Starttakt, z.B. alle 100 ms für den Rampengenerator 5.2. Mit jedem Starttakt startet der Rampengenerator 5.2 und liefert das z.B. 20 ms lange Rampensignal als Erregerspannung an den Vergleicher 3.1, der dafür sorgt, das durch die Erregerspule 1.1 ein Strom gemäß der Erregerspannung fließt. Schaltungen, die ein rampenförmiges Signal erzeugen, sind dem Fachmann bekannt, so dass hier nicht näher darauf eingegangen wird.

Dem Vergleicher 3.1 können auch Leistungstransistoren nachgeschaltet sein, um einen hohen Rampenstrom zu erzeugen. Weiterhin kann der Impedanzwandler 5.3 als Verstärker beschaltet werden. Allerdings kann bei geeignetem Rampenstrom und angepasster Windungszahl die auswertbare Spannung an der Empfängerspule einige Volt betragen, sodass keine weitere Verstärkung notwendig ist.

Die nachfolgend diskutierten Kurvenverläufe gemäß Fig. 7 wurden in der Praxis mit folgender Schaltungsvariante ermittelt: Spulen 1.1 und 1.2 je 100 Windungen, bifilar gewickelt, Spulenkörper D=10 mm, Ferrit-Schalenkern. Der maximale Rampenstrom betrug 200 mA. Die Spannung 6.1 an der Empfängerspule 1.2 hatte ohne Metalleinfluss einen Wert von 1,8 V pp.

Die Rampenlänge betrug 15 ms, was bei einer sinusförmigen Schwingung umgerechnet ca. 67 Hz als "tiefste" Frequenz entsprechen würde. Die maximale Frequenz, errechnet aus der Anstiegsgeschwindigkeit des Signales 6.1, entsprach ca. 200 kHz. Somit wurde der gesamte Frequenzbereich von 67 Hz bis 200kHz in einer einzigen Messung abgedeckt.

Der Abstand der Spulenanordnung zur Metalloberfläche betrug 1 mm. Damit wird die Spulenanordnung genau genommen nahezu auf das metallische Objekt 1.6 aufgelegt, was vorzugsweise auch der Regelfall bei der Anwendung der Messanordnung ist.

Bei Metalleinfluss auf die Spulenanordnung 1.3 des Messsystems verändert sich der Amplitudenverlauf des Ausgangssignals 5.4, also der in Fig. 6 dargestellten Kurve 6.1. Während er ohne Metalleinfluss streng linear ist und den Charakter einer Gleichspannung aufweist, weicht er je nach Metallart oder Zusammensetzung verschiedener Metalle an vorgegebenen Stellen von der dargestellten Kurve ab.

Fig. 7 verdeutlicht dies. Die dick gezeichnete Kurve 6.1 in Fig. 7. zeigt das Ausgangssignal 5.4 ohne Metalleinfluss. Abweichungen des Wertes 6.1 hin zu höheren Spannungen zeigen ferromagnetische Materialien an, dargestellt im Bereich 7.10. Para- bzw. diamagnetische Stoffe verändern die Spannung der Kurve 6.1 hin zu niedrigeren Werten, dargestellt im Bereich 7.11.

Die wesentlichen Informationen über ferromagnetische Stoffe stecken also im Wesentlichen in der Höhe der Spannung des Ausgangssignals 5.4 bei tiefen Frequenzen, also am Ende der Kurve, und etwas schwächer in dem Anstieg des Signals und dem weiteren Verlauf der Kurve. Die Kurve 7.1 zeigt den Verlauf bei einem 0,5 mm starkem Eisenblech, die Kurve 7.7 bei einem 2 mm starkem Eisenblech und die Kurve 7.12 bei einem 20 mm starken Eisenblech.

Para- bzw. diamagnetische Stoffe zeigen ihre magnetische Wechselwirkung besonders im Bereich hoher Frequenzanteile, also im Bereich des Signalanstieges, während sie sich im Bereich tiefer Frequenzen dem Wert der Kurve 6.1 (Messwert ohne Metalleinfluss) annähern.

Nachfolgend wird die Darstellung einiger Kurven erläutert, die sich bei verschiedenen flächigen Materialien (Blechen) ergeben.

Eine 50µm starke Goldfolie verändert den Signalanstieg nur im Bereich sehr hoher Frequenzen, dargestellt in Kurve 7.8.

Gleiche Aluminium-Bleche mit 1 mm Stärke, bei denen jedoch eines mit einer 50µ starken Lackschicht versehen ist, erzeugen in einem spezifischen Frequenzbereich deutlich unterschiedliche Kurven (7.15).

Sandwichausführungen verschiedener Bleche können z.B. zu einem Kurvenverlauf gemäß 7.2 führen.

Je nach der Stärke (Dicke) des Bleches "verzögert" sich der Anstieg der Kurve, bei dicken Blechen erfolgt er also später als bei dünnen. Die Kurve 7.3 entspricht 3 mm starkem Aluminium, die Kurve 7.4 5mm starkem und die Kurve 7.5 und weiterführend in 7.13 10 mm starkem Aluminium.

Mit dieser Kurvendarstellung kann auch auf eine Besonderheit der Erfindung eingegangen werden. Die Kurve 7.5 zusammen mit der Weiterführung der Kurve, dargestellt in der gepunkteten Linie 7.13 entspricht dem Kurvenverlauf bei einem 10 mm starkem Aluminiumblech. Befindet sich jedoch hinter diesem primären 10 mm starken Aluminiumblech ein sekundäres ferromagnetisches Material, so knickt ab einem durch die Dicke des primären Materials bestimmten Zeitpunktes 7.9 die Kurve ab, wie in der veränderten Kurve 7.14 dargestellt. Je dicker das primäre, nicht ferromagnetische Material ist, desto später erfolgt die Kurvenveränderung. Im Übrigen kann das Ausgangssignal einer Fourier-Analyse unterzogen werden, um weitere materialspezifische Informationen zu erhalten.

Das Ausgangssignal 5.4 ähnelt ohne Metalleinfluss während des Rampenanstiegs im Wesentlichen einer Gleichspannung. Eine Änderung des Ausgangssignals beinhalt die Information über Metallart, -beschaffenheit und -dicke, die vorzugsweise mittels einer Fourier-Analyse gewonnen werden kann.

Die Form der Rampe und damit auch eine durch ein umgebendes Metall veränderte Form der Rampe ist modifizierbar, um umgebende Metalle auszublenden.

Die bei einem spezifischem Metall oder Metallmix entstehenden Kurven können z.B. in einer Datenbank abgespeichert werden und im Vergleich mit den abgespeicherten Kurven kann dann das zu analysierende unbekannte Material identifiziert oder definiert werden.

Gleichzeitig können mit dieser Messmethode natürlich auch Materialien auf spezifische Veränderungen ihrer kristallinen Struktur durch Stress (Stauchung, Dehnung) untersucht werden bzw. Haarrisse oder Materialfehler detektiert werden.

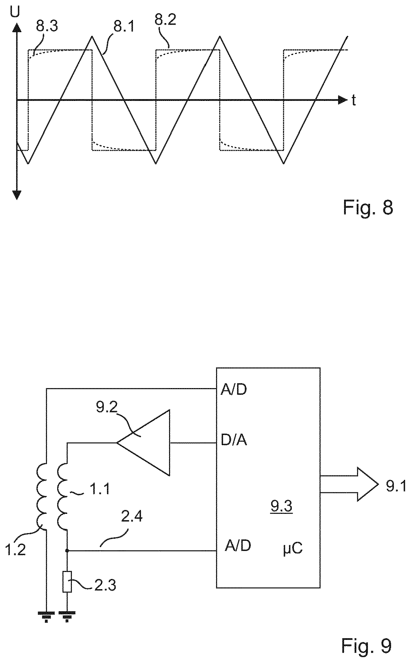

In einer weiteren Ausführungsform kann der Erregerstrom auch einem kontinuierlichen auf- und absteigenden Rampensignal 8.1 gemäß Fig. 8 folgen. Das Ausgangssignal 5.4 nimmt dann, wie in Fig. 8 mit Kurve 8.2 dargestellt, positive und negative Werte an bzw. weist bei Metalleinfluss die gleichen Veränderung des Kurvenverlaufes 8.3 wie bei einer einzelnen Rampe auf, jedoch zusätzlich im negativem Bereich gespiegelt. Diese Ausgestaltung eignet sich besonders, wenn schnelle Veränderungen der Metallart oder schnelle Positionsveränderungen detektiert werden sollen.

Mit Ansteuerung und Auswertung des Erreger- und des Empfangssignals unter Verwendung eines Mikrocontroller 9.3 gemäß Fig. 9 gestaltet sich das Messsystem besonders einfach, da im Wesentlichen nur ein Stromtreiber 9.2 und ein Fußpunktwiderstand 2.3 benötigt wird, um ein temperaturstabiles preiswertes Analyseverfahren für die verschiedensten Aufgaben wie Lackdickenmessung, Doppelblecherkennung, Mehrschichtanalyse, Materialbestimmung usw. zu ermöglichen. Der Mikrocontroller 9.3 kann einen Kommunikationskanal 9.1 zu einer Display- oder Auswerteeinheit aufweisen, um z.B. die gemessenen Werte mit einer Datenbank zu vergleichen oder z.B. direkt auf einem Display anzuzeigen.

Geschaffen wird damit ein System zur Messung der induktiven Eigenschaften eines beliebigen metallischen Objekts 1.6, wobei Temperatureinflüsse auf Spulensystem und Messung keinen Einfluss haben. Dennoch deckt das System mit einer Messung einen großen Spektralbereich von z.B. 50Hz-200kHz ab und benötigt dabei nur einen geringen elektronischen Aufwand.

Hervorzuheben ist die große Eindringtiefe, insbesondere bei langsam ansteigenden Rampenströmen von z.B. > 100 ms Rampenlänge. Durch Fourier-Analyse des Ausgangssignals 5.4 konnten z.B. mit einer Topfkernspulenanordnung mit 10 mm Durchmesser drei beliebig übereinander angeordnete Lagen verschiedener Bleche (Messing, Aluminium, Kupfer, Bronze, usw.) mit jeweils 1 bis 2 mm Stärke hinsichtlich ihrer Reihenfolge sowie die einzelnen Blechstärken ermittelt werden. Dadurch wird deutlich, dass die Messanordnung und das Verfahren auch für eine Tiefenanalyse oder eine Blechdickenmessung geeignet sind. Mit einer im Durchmesser 50 mm großen, ferritkernlosen flachen Spulenanordnung kann z.B. über 30 mm tief in Nichteisenmetalle gesehen werden.

**Bezugszeichenliste**

| | | | |
|---|---|---|---|
| 1.1 | Erregerspule | 7.3 | Kurvenform mit 3 mm Aluminium |
| 1.2 | Empfängerspule | 7.4 | Kurvenform mit 5 mm Aluminium |
| 1.3 | Spulenanordnung | 7.5 | Kurvenform mit 10 mm Aluminium und 5mm Eisenblech |
| 1.4 | Erregerstrom | | |
| 1.5 | Spannung der Empfängerspule | 7.6 | Kurvenform mit 5 mm Aluminium und 5 mm Eisenblech |
| 1.6 | Metallisches Objekt | | |
| 1.7 | Magnetisch induzierte Wechselwirkung | 7.7 | Kurvenform mit 2 mm starkem Eisen-blech |
| 2.2 | Einspeiseanschluss | | |
| 2.3 | Fußpunktwiderstand | 7.8 | Kurvenform mit 50µm Goldfolie |
| 2.4 | Spannung am Fußpunktwiderstand | 7.9 | Knick im Kurvenverlauf |
| 2.5 | Kurvenverlauf der vorgegebenen Erregerspannung | 7.10 | Bereich ferromagnetischer Stoffe |
| | | 7.11 | Bereich para- bzw. diamagnetischer Stoffe |
| 3.1 | Vergleicher (Operationsverstärker) | | |
| 3.2 | Spannung am Ausgang von 3.1 | 7.12 | Kurvenform mit 20 mm Eisenblech |
| 3.3 | Nicht invertierender Eingang von 3.1 | 7.13 | Weiterführung der Kurve 7.5 |
| 4.1 | Spannungswert am Fußpunktwiderstand | 7.14 | Veränderung der Kurvenform durch weiteres ferromagnetisches Metall |
| 4.2 | Spannungsanstieg | 7.15 | Kurvenform gleicher Bleche mit 1 mm Stärke, aber eines mit 30µ Beschich-tung |
| 5.1 | Taktgenerator | | |
| 5.2 | Rampengenerator | | |
| 5.3 | Impedanzwandler oder Verstärker mit hochohmigem Eingang | 8.1 | Auf- und absteigendes Rampensignal |
| | | 8.2 | Ausgangssignal mit positiven und ne-gativen Werten |
| 5.4 | Ausgangssignal | | |
| 6.1 | Amplitudenverlauf von 5.4 | 8.3 | veränderter Kurvenverlauf bei Metall-einfluss |
| 6.2 | Stromverlauf an 2.3 infolge von 2.5 | | |
| 7.1 | Kurvenform mit 0,5 mm starkem Eisenblech | 9.1 | Kommunikationskanal zur Display- o-der Auswerteeinheit. |
| 7.2 | Kurvenform mit Sandwichanordnung dreier Bleche | 9.2 | Stromtreiber |
| | | 9.3 | Mikrocontroller |

## Patentansprüche

1. Messanordnung, bestimmt und geeignet zur induktiven Analyse metallischer Objekte (1.6), mit
- einer Spulenanordnung, die wenigstens eine mittels einer Erregerspannung erregbare Erregerspule (1.1) und wenigstens eine Empfängerspule (1.2) umfasst, welche induktiv miteinander gekoppelt sind,
- einem Fußpunktwiderstand (2.3) an einem Fußpunkt der Erregerspule (1.1),
- einer Elektronik zur Bestromung der Erregerspule (1.1) und
- einer Auswerteeinheit zur Auswertung eines von der Empfängerspule (1.2) abgegriffenen Ausgangssignals (5.4) der Messanordnung,
- Mitteln zur Erzeugung eines rampenförmigen Spannungsignals der Erregerspannung (2.5) als Vorgabe für einen rampenförmigen Strom durch die Erregerspule,
- einer Regeleinrichtung mit einem Operationsverstärker (3.1) oder Vergleicher, an dessen ersten Eingang (3.3) die Erregerspannung (2.5) anliegt und an dessen zweiten Eingang die Spannung (2.4) an dem Fußpunktwiderstand (2.3) der Erregerspule (1.1) anliegt und dessen Ausgang den Einspeiseanschluss (2.2) der Erregerspule (1.1) speist,
- wobei die Regeleinrichtung dazu eingerichtet ist, den Strom am Fußpunkt der Erregerspule (1.1) so zu regeln, dass ein rampenförmiger Erregerstrom entsteht, der durch das metallische Objekt (1.6) zeitlich modulierbar ist unter Veränderung der Erregerspannung,
- wobei die Auswerteeinheit dazu eingerichtet ist, das Ausgangssignal (5.4) der Messanordnung zur Analyse des metallischen Objekts auszuwerten.

2. Messanordnung nach Anspruch 1, **dadurch gekennzeichnet, dass** die Regeleinrichtung dazu eingerichtet ist, den Strom am Fußpunkt der Erregerspule (1.1) so zu regeln, dass ein stetig steigender Erregerstrom entsteht, dessen Stärke durch die Einwirkung des metallischen Objekts (1.6) während des rampenförmigen Anstiegs des Erregerstroms änderbar ist.

3. Messanordnung nach Anspruch 2, **dadurch gekennzeichnet, dass** die Stärke des Erregerstroms durch die Art des Metalls des metallischen Objekts (1.6) änderbar ist.

4. Messanordnung nach einem der vorhergehenden Ansprüche, **dadurch gekennzeichnet, dass** die Mittel zur Erzeugung eines rampenförmigen Spannungsignals der Erregerspannung (2.5) dazu eingerichtet sind, bei Beginn des rampenförmigem Anstiegs zunächst einen gegenüber dem rampenförmigem Anstieg steilen Anstieg (4.2) der Erregerspannung zur Überwindung der dem Magnetfeld entgegenwirkenden Eigeninduktion der Erregerspule (1.1) zu erzeugen.

5. Messanordnung nach einem der vorhergehenden Ansprüche, **dadurch gekennzeichnet, dass** die Empfängerspule (1.2) benachbart und/oder parallel zur Erregerspule (1.1) angeordnet ist.

6. Messanordnung nach einem der vorhergehenden Ansprüche, **dadurch gekennzeichnet, dass** das Ausgangssignal (5.4) an der Empfängerspule (1.2) hochohmig abgegriffen ist.

7. Verfahren zur induktiven Analyse metallischer Objekte (1.6) mit einer Messanordnung mit einer Spulenanordnung, die wenigstens eine mittels einer Erregerspannung (2.5) erregbare Erregerspule (1.1) und wenigstens eine Empfängerspule (1.2) umfasst, welche induktiv miteinander gekoppelt sind, sowie einen Fußpunktwiderstand (2.3) an einem Fußpunkt der Erregerspule (1.1) umfasst,
wobei die Erregerspule (1.1) bestromt wird und ein von der Empfängerspule (1.2) abgegriffenes Ausgangssignal (5.4) der Messanordnung zur Analyse der metallischen Objekte ausgewertet wird,
wobei ein rampenförmiges Spannungssignal der Erregerspannung (2.5) als Vorgabe für einen rampenförmigen Strom durch die Erregerspule (1.1) zugeführt wird,
wobei eine Regeleinrichtung mit einem Operationsverstärker (3.1) oder Vergleicher, an dessen ersten Eingang (3.3) die Erregerspannung (2.5) anliegt und an dessen zweiten Eingang die Spannung (2.4) an dem Fußpunktwiderstand (2.3) der Erregerspule (1.1) anliegt und dessen Ausgang den Einspeiseanschluss (2.2) der Erregerspule (1.1) speist, den Strom durch die Erregerspule (1.1) am Fußpunkt der Erregerspule (1.1) so regelt, dass ein rampenförmiger Erregerstrom an dem Fußpunktwiderstand (2.3) entsteht, wobei der in der Erregerspule fließende Strom durch das metallische Objekt (1.6) modulierbar ist unter Veränderung der Erregerspannung,
wobei das Ausgangssignal (5.4) der Messanordnung zur Analyse der metallischen Objekte ausgewertet wird.

8. Verfahren nach Anspruch 7, **dadurch gekennzeichnet, dass** der Strom am Fußpunkt der Erregerspule (1.1) so geregelt wird, dass ein stetig steigender Erregerstrom entsteht, dessen Stärke durch die Einwirkung des metallischen Objekts (1.6) während des rampenförmigen Anstiegs des Erregerstroms veränderbar ist.

9. Verfahren nach Anspruch 8, **dadurch gekennzeichnet, dass** die Stärke des Erregerstroms durch die Art des Metalls des metallischen Objekts (1.6) veränderbar ist.

10. Verfahren nach einem der Ansprüche 7 bis 9, **dadurch gekennzeichnet, dass** am Beginn des rampenförmigen Spannungsignals der Erregerspannung (2.5) zunächst einen gegenüber dem rampenförmigen Anstieg steiler Anstieg (4.2) der Spannung an der Erregerspule (1.1) erfolgt..

11. Verfahren nach einem der Ansprüche 7 bis 10, **dadurch gekennzeichnet, dass** die Empfängerspule (1.1) benachbart und/oder parallel zur Erregerspule (1.2.) angeordnet wird.

12. Verfahren nach einem der Ansprüche 7 bis 11, **dadurch gekennzeichnet, dass** das Ausgangssignal (5.4) an der Empfängerspule (1.1) hochohmig abgegriffen wird.

## Claims

1. A measuring arrangement, intended and configured for the inductive analysis of metal objects (1.6), comprising
- a coil arrangement comprising at least one exciter coil (1.1), which is excitable by means of an excitation voltage, and at least one receiver coil (1.2), which are inductively coupled to one another,
- a foot point resistor (2.3) at a foot point of the exciter coil (1.1),
- electronics equipment for energising the exciter coil (1.1) and
- an evaluation unit for evaluating an output signal (5.4) of the measuring arrangement, which output signal is detected by the receiver coil (1.2),
- means for generating a ramped voltage signal of the excitation voltage (2.5) as a presetting for a ramped current through the exciter coil,
- a closed-loop control device comprising an operational amplifier (3.1) or comparator, to the first input (3.3) of which the excitation voltage (2.5) is applied, and to the second input of which the voltage (2.4) at the foot point resistor (2.3) of the exciter coil (1.1) is applied and the output of which feeds the supply terminal (2.2) of the exciter coil (1.1),
- wherein the closed-loop control device is configured to control the current at the foot point of the exciter coil (1.1) such that a ramped excitation current is produced, which is modulatable in time by the metal object (1.6) in changing the excitation voltage,
- wherein the evaluation unit is configured to evaluate the output signal (5.4) of the measuring arrangement for analysing the metal object.

2. Measuring arrangement according to Claim 1, **characterised in that** the closed-loop control device is configured to control the current at the foot point of the exciter coil (1.1) such that a constantly rising excitation current is produced, wherein the strength of the excitation current is changeable by the influence exerted by the metal object (1.6) during the ramping up of the excitation current.

3. Measuring arrangement according to Claim 2, **characterised in that** the strength of the excitation current is changeable by the type of metal of the metal object (1.6).

4. Measuring arrangement according to one of the preceding claims, **characterised in that** the means for generating a ramped voltage signal of the excitation voltage (2.5) are configured to generate, at the beginning of the ramping up, at first an increase (4.2) in the excitation voltage that is steep by comparison with the ramping up, for the purpose of overcoming the self-inductance of the exciter coil (1.1) that counters the magnetic field.

5. Measuring arrangement according to one of the preceding claims, **characterised in that** the receiver coil (1.2) is arranged adjacent to and/or parallel to the exciter coil (1.1).

6. Measuring arrangement according to one of the preceding claims, **characterised in that** the output signal (5.4) at the receiver coil (1.1) is detected at a high impedance.

7. A method for the inductive analysis of metal objects (1.6), comprising a measuring arrangement with a coil arrangement comprising at least one exciter coil (1.1), which is excitable by means of an excitation voltage (2.5), and at least one receiver coil (1.2), which are inductively coupled to one another, and a foot point resistor (2.3) at a foot point of the excitor coil (1.1),
wherein the exciter coil (1.1) is energised and an output signal (5.4) of the measuring arrangement, which output signal is detected by the receiver coil (1.2), is evaluated for the purpose of analysing the metal objects, wherein a ramped voltage signal of the excitation voltage (2.5) is supplied as a presetting for a ramped current through the exciter coil (1.1),
wherein a closed-loop control device comprising an operational amplifier (3.1) or comparator, to the first input (3.3) of which the excitation voltage (2.5) is applied, and to the second input of which the voltage (2.4) is applied at the foot point resistor (2.3) of the exciter coil (1.1) applied and the output of which feeds the supply terminal (2.2) of the exciter coil (1.1), controls the current through the exciter coil (1.1) at the foot point of the exciter coil (1.1) such that a ramped excitation current is produced at the foot point resistor (2.3), wherein the current flowing in the exciter coil is modulatable by the metal object (1.6) in changing the excitation voltage,
wherein the output signal (5.4) of the measuring arrangement is evaluated for analysing the metal objects.

8. A method according to Claim 7, **characterised in that** the current at the foot point of the exciter coil (1.1) is subjected to closed-loop control such that a constantly increasing excitation current is produced, the strength of which is changeable by the influence exerted by the metal object (1.6) during the ramping up of the excitation current.

9. A method according to Claim 8, **characterised in that** the strength of the excitation current is changeable by the type of metal of the metal object (1.6).

10. A method according to one of Claims 7 to 9, **characterised in that**, at the beginning of the ramped voltage signal of the excitation voltage (2.5), at first there is an increase (4.2) in the voltage at the exciter coil (1.1) that is steep by comparison with the ramping up.

11. A method according to one of Claims 7 to 10, **characterised in that** the receiver coil (1.1) is arranged adjacent to and/or parallel to the exciter coil (1.2).

12. A method according to one of Claims 7 to 11, **characterised in that** the output signal (5.4) at the receiver coil (1.1) is detected at a high impedance.

## Revendications

1. - Dispositif de mesure destiné et apte à une analyse inductive d'objets métalliques (1.6), comportant
- un dispositif à bobines comprenant au moins une bobine d'excitation (1.1) excitable au moyen d'une tension d'excitation et au moins une bobine de réception (1.2), ces bobines étant couplées l'une à l'autre de façon inductive,
- une résistance de pied (2.3) à un pied de la bobine d'excitation (1.1),
- une électronique pour l'alimentation de la bobine d'excitation (1.1), et
- une unité d'exploitation pour exploiter un signal de sortie (5.4) du dispositif de mesure capté par la bobine de réception (1.2),
- des moyens de production d'un signal de tension en forme de rampe de la tension d'excitation (2.5) en tant que valeur prédéterminée pour un courant en forme de rampe à travers la bobine d'excitation,
- un dispositif de réglage avec un amplificateur opérationnel (3.1) ou un comparateur, à la première entrée (3.3) duquel la tension d'excitation (2.5) est appliquée et à la deuxième entrée duquel la tension (2.4) est appliquée à la résistance de pied (2.3) de la bobine d'excitation (1.1) et dont la sortie alimente l'entrée (2.2) de la bobine d'excitation (1.1),
- dans lequel le dispositif de réglage est prévu pour régler le courant au pied de la bobine d'excitation (1.1) de telle manière qu'il se produit un courant d'excitation en forme de rampe qui peut être modulé dans le temps par l'objet métallique (1.6) en modifiant la tension d'excitation,
- dans lequel l'unité d'exploitation est prévue pour exploiter le signal de sortie (5.4) du dispositif de mesure pour l'analyse de l'objet métallique.

2. Dispositif de mesure selon la revendication 1, **caractérisé en ce que** le dispositif de réglage est prévu pour régler le courant au pied de la bobine d'excitation (1.1) de sorte à produire un courant d'excitation croissant continuellement et dont la force peut être modifiée par l'action de l'objet métallique (1.6) pendant la croissance en forme de rampe du courant d'excitation.

3. Dispositif de mesure selon la revendication 2, **caractérisé en ce que** la force du courant d'excitation est modifiable par la nature du métal constituant l'objet métallique (1.6).

4. Dispositif de mesure selon l'une des revendications précédentes, **caractérisé en ce que** les moyens pour la production d'un signal de tension en forme de rampe de la tension d'excitation (2.5) sont prévus pour produire au début de la montée en forme de rampe, d'abord une montée abrupte (4.2) de la tension d'excitation par rapport à la montée en forme de rampe pour surmonter l'induction propre de la bobine d'excitation (1.1) agissant contre le champ magnétique.

5. Dispositif de mesure selon l'une des revendications précédentes, **caractérisé en ce que** la bobine de réception (1.2) est disposée à côté de et/ou parallèlement à la bobine d'excitation (1.1).

6. Dispositif de mesure selon l'une des revendications précédentes, **caractérisé en ce que** le signal de sortie (5.4) est capté au niveau de la bobine de réception (1.2) avec une résistance élevée.

7. Procédé pour l'analyse inductive d'objets métalliques (1.6) avec un dispositif de mesure comportant un dispositif à bobines comprenant au moins une bobine d'excitation (1.1) excitable au moyen d'une tension d'excitation (2.5) et au moins une bobine de réception (1.2), ces bobines étant couplées l'une à l'autre de manière inductive, ainsi qu'une résistance de pied (2.3) à un pied de la bobine d'excitation (1.1),
dans lequel la bobine d'excitation (1.1) est alimentée en courant et un signal de sortie (5.4) du dispositif de mesure capté par la bobine de réception (1.2) est exploité pour l'analyse des objets métalliques,
dans lequel un signal de sortie en forme de rampe de la tension d'excitation (2.5) est fourni par la bobine d'excitation (1.1) en tant que valeur prédéterminée pour un courant en forme de rampe,
dans lequel un dispositif de réglage avec un amplificateur opérationnel (3.1) ou un comparateur, à la première entrée (3.3) duquel la tension d'excitation (2.5) est appliquée, et à la deuxième entrée duquel la tension (2.4) est appliquée à la résistance de pied (2.3) de la bobine d'excitation (1.1) et dont la sortie alimente l'entrée de la bobine d'excitation (1.1), règle le courant à travers la bobine d'excitation (1.1) au pied de la bobine d'excitation (1.1) de telle manière qu'un courant d'excitation en forme de rampe apparaît au niveau de la résistance de pied (2.3), le courant circulant dans la bobine d'excitation étant modulable par l'objet métallique (1.2) et modifiable par la tension d'excitation,
dans lequel le signal de sortie (5.4) du dispositif de mesure est exploité pour l'analyse des objets métalliques.

8. Procédé selon la revendication 7, **caractérisé en ce que** le courant au niveau du pied de la bobine d'excitation (1.1) est réglé de telle manière qu'un courant d'excitation continuellement croissant apparaisse, dont la force est modifiable par l'action de l'objet métallique (1.6) pendant la montée en forme de rampe du courant d'excitation.

9. Procédé selon la revendication 8, **caractérisé en ce que** la force du courant d'excitation peut être modifiée par la nature du métal constituant l'objet métallique (1.6).

10. Procédé selon l'une des revendications 7 à 9, **caractérisé en ce qu'**au début du signal de tension en forme de rampe de la tension d'excitation (2.5) se produit d'abord une montée abrupte (4.2) de la tension au niveau de la bobine d'excitation (1.1) par rapport à la montée en forme de rampe.

11. Procédé selon l'une des revendications 7 à 10, **caractérisé en ce que** la bobine de réception (1.1) est disposée à côté de et/ou parallèlement à la bobine d'excitation (1.1).

12. Procédé selon l'une des revendications 7 à 11, **caractérisée en ce que** le signal de sortie (5.4) est capté au niveau de la bobine de réception (1.2) avec une résistance élevée.
